# EUROPEAN PATENT APPLICATION

(11) **EP 4 848 417 A1**
(43) Date of publication of application: **02.12.2026**
(21) Application number: 25744706.0
(22) Date of filing: 24.01.2025
(51) Int. Cl.: H01M 50/148, H01M 50/169, H01M 50/10, H01M 10/0525

(54) **BATTERY HOUSING AND POWER BATTERY**

(30) Priority: 24.01.2024 CN 202410096162
(71) Applicant: SVOLT Energy Technology Co., Ltd., Changzhou, Jiangsu 213200 (CN)
(72) Inventor: SUN, Chao, hangzhou, Jiangsu 213200 (CN); LI, Jincheng, hangzhou, Jiangsu 213200 (CN); WANG, Jiahao, hangzhou, Jiangsu 213200 (CN); XU, Ying, hangzhou, Jiangsu 213200 (CN); ZHOU, Jie, hangzhou, Jiangsu 213200 (CN); LI, Zhaohua, hangzhou, Jiangsu 213200 (CN)
(74) Representative: Michalski Hüttermann & Partner mbB
(86) International application number: PCT/CN2025/074520
(87) International publication number: WO 2025/157243

(57) **Abstract**

A battery housing and a power battery. The battery housing comprises cover plates and a casing (4). The casing (4) is of a hollow structure having openings, the cover plates are provided with connecting bosses (3), and the connecting bosses (3) are inserted into the openings of the casing (4), so that the cover plates close the casing (4) to form an accommodating cavity (8). A weld seam (9) is formed at the junction of the casing (4) and each cover plate, the weld seam (9) has a weld width n, the thickness of the area of the cover plate in which the connecting boss (3) is provided is a, and a weld width ratio is X=n/a, with a range of 0.16≤X≤1.

## Description

### CROSS-REFERENCE TO RELATED APPLICATION

The present application claims priority to Chinese patent application No. 202410096162.3 filed with China National Intellectual Property Administration on January 24, 2024, which is hereby incorporated by reference in its entirety.

### FIELD

The present application relates to the field of battery, in particular to a battery case and a power battery.

### BACKGROUND

A Lithium-ion power battery generally includes an internal battery structure and an external battery structure. The internal battery structure primarily includes a cell electrode assembly, and the external battery structure primarily includes a cell cover plate and a cell housing. The cell housing provides an accommodation space for the cell electrode assembly, and the cell cover plate is fitted with the cell housing by welding to form an enclosed space, constituting an integral lithium-ion battery structure. Typically, the cell housing and the cell cover plate are assembled into the external battery structure through laser welding, and the housing has opening structures at both sides thereof, which are fitted with the cell cover plate through welding.

### BRIEF SUMMARY

The present application provides a battery case and a power battery featuring secure welding, good welding airtightness, and high usage safety.

According to an embodiment of the present application, there is provided a battery case including a cover plate and a housing, where the housing is a hollow structure provided with an opening, and the cover plate is provided with a connection boss, the connection boss is inserted into the opening of the housing and the cover plate encloses the housing to form an accommodation cavity;
a weld seam is provided at a connection between the housing and the cover plate; the weld seam has a weld width denoted by n, a thickness of a region of the cover plate where the connection boss is provided is denoted by a, a weld width ratio is denoted by X=n/a, and X ranges from 0.16 to 1.

In some embodiments, the weld seam further has a penetration depth denoted by m, a wall thickness of the housing is denoted by b, a penetration depth ratio is denoted by Y=m/b, and Y ranges from 1 to 7.5.

In some embodiments, the thickness a is greater than the weld width n, and the wall thickness b is less than the penetration depth m.

In some embodiments, dimensional information of the battery case includes at least one of: the weld width n ranging from 500 µm to 2000 µm, or the thickness a ranging from 1.5 mm to 3 mm.

In some embodiments, dimensional information of the battery case includes at least one of: the penetration depth m ranging from 500 µm to 1500 µm, or the wall thickness b ranging from 0.2 mm to 1.5 mm.

In some embodiments, after the cover plate is welded to the housing, a first protruding structure is formed at a top surface of the cover plate, and a height of the first protruding structure is denoted by C1 and C1 is less than 200 µm.

In some embodiments, after the cover plate is welded to the housing, a second protruding structure is formed at side surfaces of the cover plate and the housing, and a height of the second protruding structure is denoted by C2 and C2 is less than 200 µm.

In some embodiments, a side of the connection boss facing the housing is provided with a guide inclined surface.

In some embodiments, the cover plate is connected to the housing through laser welding.

According to an embodiment of the present application, there is further provided a power battery including the battery case according to any of the preceding embodiments, where the power battery further includes a cell electrode assembly disposed within the accommodation cavity, a length of the power battery is denoted by L ranging from 100 mm to 600 mm or from 600 mm to 1500 mm; a width of the power battery is denoted by B ranging from 50 mm to 250 mm; and a height of the power battery is denoted by H ranging from 10 mm to 100 mm.

### BRIEF DESCRIPTION OF THE DRAWINGS

FIG. 1 is a schematic structural diagram of a blade lithium-ion power battery according to some embodiments of the present application;
FIG. 2 is a schematic diagram of connection between a positive electrode cover plate and a housing of a battery case in a blade lithium-ion power battery according to some embodiments of the present application;
FIG. 3 is a metallograph of a blade lithium-ion power battery in which a positive electrode cover plate and a housing of a battery case are welded according to some embodiments of the present application;
FIG. 4 is a top view of a prismatic lithium-ion power battery according to some embodiments of the present application;
FIG. 5 is a cross-sectional view along A-A line in FIG. 4;
FIG. 6 is a schematic diagram of connection between a top cover and a housing of a battery case in a prismatic lithium-ion power battery according to some embodiments of the present application;
FIG. 7 is a metallograph of a prismatic lithium-ion power battery in which a top cover and a housing of a battery case are welded according to some embodiments of the present application;
FIG. 8 is a table of selected thirteen sets of test data in which the weld width n ranges from 500 µm to 2000 µm and the penetration depth m ranges from 500 µm to 1500 µm according to the present application;
FIG. 9 is a table of selected twelve sets of test data in which the weld width n is beyond ranging from 500 µm to 2000 µm and the penetration depth m is beyond ranging from 500 µm to 1500 µm according to the present application; and
FIG. 10 is a schematic diagram of external dimensions of a power battery according to some embodiments of the present application.

Reference signs:
100: cell electrode assembly;
1: positive electrode cover plate;
2: negative electrode cover plate;
3: connection boss; 31, guide inclined surface;
4: housing;
5: first protruding structure;
6: second protruding structure;
7: top cover;
8: accommodation cavity; and
9: weld seam.

### DETAILED DESCRIPTION

The present application is described in further detail below in connection with the accompanying drawings and embodiments. The embodiments described herein are only used to explain the present application. For ease of description, the drawings show only the structures relevant to the present application.

In the description of the present application, unless explicitly stated and defined otherwise, the terms "connected," "coupled," and "fixed" should be interpreted in a broad sense. For example, it may refer to a fixed connection, a detachable connection, or an integral structure; it may refer to a mechanical connection or an electrical connection; it may refer to a direct connection or an indirect connection via an intermediate medium; or it may refer to internal communication inside two components or an interaction between two components. The specific meanings of the terms above in the present application can be understood by those skilled in the art in accordance with specific conditions.

In the present application, unless otherwise expressly specified or defined, a first feature being "on" or "under" a second feature may encompass cases where the first feature is in direct contact with the second feature, as well as cases where the first feature is not in direct contact with the second feature but is in contact therewith via another feature therebetween. Furthermore, the first feature being "on," "above" and "over" the second feature includes a case where the first feature is directly above or obliquely above the second feature, or refers to a case that the first feature has a higher horizontal elevation than the second feature. The first feature being "under", "below" and "beneath" the second feature includes a case where the first feature is directly below or obliquely below the second feature, or refers to a case that the first feature has a lower horizontal elevation than the second feature.

In the description of the present embodiment, the orientation or positional relationships indicated by terms such as "upper," "lower," "left," "right," etc. are based on the orientation or positional relationship shown in the drawings, and are merely for ease of description and simplifying the operation, rather than indicating or implying that the device or component stated must have a particular orientation, be constructed and operated in a particular orientation. Additionally, the terms "first" and "second" are used solely for the purpose of distinction in the description without special significance.

In related art, a cell electrode assembly is first mounted inside a cell housing, then the opening is enclosed with a cell cover plate, and the cell cover plate is welded at the opening through laser seam welding. However, during current sealing welding processes, parameters such as penetration depth and weld width of welded cell cover plate and cell housing are not constrained. As a result, welded connection between the cover plate and the housing lacks sufficient strength and is prone to cracking and damage. This is particularly problematic when gas is generated during charging and discharging of the battery, internal pressure exerts shear force on the weld seam, causing the weld seam susceptible to cracking. Poor welding airtightness leads to electrolyte leakage, resulting in battery failure and safety incidents.

To ensure the battery case possesses sufficient weld strength and welding airtightness, the present embodiment provides a battery case.

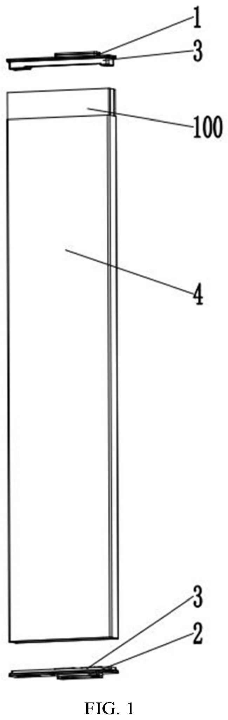

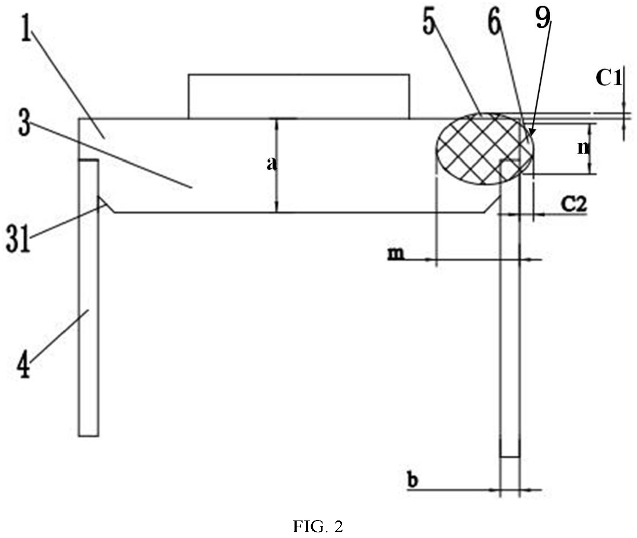

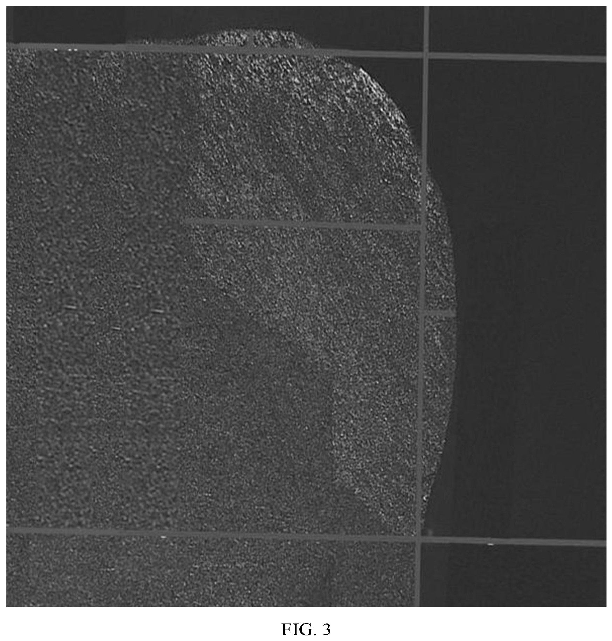

As shown in FIG. 1 to FIG. 3, the battery case includes a cover plate and a housing 4. The housing 4 is a hollow structure with an opening, and the cover plate is provided with a connection boss 3, the connection boss 3 is inserted into the opening of the housing 4 and the cover plate encloses the housing 4 to form an accommodation cavity 8. A weld seam 9 is provided at a connection between the housing 4 and the cover plate. The weld seam 9 has a weld width denoted by n, a thickness of a region of the cover plate where the connection boss 3 is provided is denoted by a, a weld width ratio is denoted by X=n/a, and the weld width ratio ranges from 0.16 to 1.

By providing the connection boss 3 at the cover plate, the connection boss 3 is inserted into the opening of the housing 4 when the cover plate is connected to the housing 4 and the connection between the cover plate and the housing 4 is firmer to facilitate welding. Moreover, by setting the weld width ratio X of the weld width n of the weld seam 9 at the connection between the cover plate and housing 4 to the thickness of the region of the cover plate where the connection boss 3 is provided, the battery case achieves sufficient weld strength and welding airtightness when the weld width ratio X ranges from 0.16 to 1.

The structure of the battery case and the defined range for the weld width ratio X are applicable to various types of power batteries. In the present embodiment, the battery case is a battery case of a blade lithium-ion power battery. Positive and negative electrode tabs of the blade lithium-ion power battery are located at opposite sides of the cell, the housing 4 is a hollow structure with an opening at both sides. Two corresponding cover plates that is positive electrode cover plate 1 and a negative electrode cover plate 2 are provided at the respective openings of the housing 4. After the cover plates are welded to the housing 4, the weld strength and airtightness are verified through strength test and helium leak test. When the strength test is performed on the welded cover plate and housing 4, a pressure exceeding 1.2 megapascals (MPa) is applied to the welded cover plate and housing 4. If no gas leakage occurs under these conditions, it demonstrates that the weld seam will only rupture when the internal pressure significantly exceeds 1.2 MPa, and the weld strength meets requirements. When the helium leak test is performed on the welded cover plate and housing 4, the sealing requirement is satisfied if a measured helium leak rate obtained after the cover plate and housing 4 are welded is less than 1×10⁻⁷ Pa·m³/s. The helium leak test refers to checking the airtightness of the battery after the cover plate is welded to the housing 4 using a helium mass spectrometer.

In an embodiment, the weld seam 9 further has a penetration depth denoted by m, wall thickness of the housing 4 is denoted by b, penetration depth ratio is denoted by Y=m/b, and the range of the penetration depth ratio ranges from 1 to 7.5. By setting the penetration depth ratio Y of the penetration depth m of the weld seam 9 at the connection between the housing 4 and the cover plate to the wall thickness b of the housing 4, the battery case achieves sufficient weld strength and welding airtightness when the penetration depth ratio Y ranging from 1 to 7.5 and the weld width ratio X ranging from 0.16 to 1 cooperate.

In an embodiment, the thickness a is greater the weld width n, and the wall thickness b is less than the penetration depth m. By configuring the thickness a to be greater than the weld width n, the formation of weld beads during welding is prevented, improving the welding yield rate and avoiding the rework that would otherwise increase production costs. By configuring the penetration depth m to be greater than the wall thickness b of the housing 4, it ensures a more thorough during welding between the housing 4 and the cover plate, ensuring high weld strength and welding airtightness.

In some embodiments, the weld width n ranges from 500 µm to 2000 µm, and/or the thickness a ranges from 1.5 mm to 3 mm. By way of example, the thickness a of the cover plate may be any specific value between 1.5 mm and 3 mm, or any range defined by two values within this interval, e.g., 1.5 mm, 2 mm, 2.5 mm, or 3 mm. In the present embodiment, an exemplary value for the thickness a of the cover plate is 2 mm.

When the thickness a is a maximum value of 3 mm, the weld width n ranges from 500 µm to 2000 µm since the thickness a needs to be greater than the weld width n, and the weld width ratio reaches a minimum value of 0.16 when the weld width n is 500 µm; and
when the thickness a is a minimum value of 1.5 mm, the weld width n ranges from 500 µm to 1500 µm since the thickness a needs to be greater than the weld width n, and the weld width ratio reaches a maximum value of 1 when the weld width n is 1500 µm.

In some embodiments, the penetration depth m ranges from 500 µm to 1500 µm, and/or the wall thickness b ranges from 0.2 mm to 1.5 mm. By way of example, the wall thickness b of the housing 4 may be any value between 0.2 mm and 1.5 mm, or a range defined by any two values within this range, such as 0.2 mm, 0.25 mm, 0.3 mm, 0.35 mm, 0.4 mm, 0.45 mm, 0.5 mm, 0.55 mm, 0.6 mm, 0.65 mm, 0.7 mm, 0.75 mm, 0.8 mm, 0.85 mm, 0.9 mm, 0.95 mm, 1.0 mm, or 1.5 mm. In the present embodiment, an exemplary value for the wall thickness b of the housing 4 is 0.35 mm.

When the wall thickness b is a maximum value of 1.5 mm, the penetration depth m is limited to 1500 µm since the wall thickness b is less than the penetration depth m, and the penetration depth ratio reaches a minimum value of 1; and
when the wall thickness b is a minimum value of 0.2 mm, the penetration depth m ranges from 500 µm to 1500 µm since the wall thickness b is less than the penetration depth m, and the penetration depth ratio reaches a maximum value of 7.5 when the penetration depth m is 1500 µm.

In some embodiments, after the cover plate is welded to the housing 4, a first protruding structure 5 is formed at a top surface of the cover plate, and a height of the first protruding structure 5 is denoted by C1 and C1 is less than 200 µm. The first protruding structure 5 is formed at the top surface of the cover plate since high welding temperature can affect microstructure inside the cover plate. By limiting the height C1 of the first protruding structure 5, it is possible to prevent an insulating protective sheet from curling when the insulating protective sheet attached to the top surface of the cover plate, avoiding any adverse effect on the surface flatness of the battery case.

In some embodiments, after the cover plate is welded to the housing 4, a second protruding structure 6 is formed at side surfaces of the cover plate and the housing 4, and a height of the second protruding structure 6 is denoted by C2 and C2 is less than 200 µm. The second protruding structure 6 is formed at side surfaces of the cover plate and the housing 4 since high welding temperature can affect microstructure inside the cover plate and the housing 4. By limiting the height C2 of the second protruding structure 6, it is possible to prevent the insulating protective sheet from curling when the insulating protective sheet attached to the side surface of the cover plate and the housing 4, avoiding any adverse effect on the surface flatness of the battery case.

When the weld width n of the weld seam 9 formed by welding the cover plate to the housing 4 ranges from 500 µm to 2000 µm and a penetration depth m ranges from 500 µm to 1500 µm, a burst pressure is greater than 1.2 MPa and a measured helium leak rate is less than 1×10⁻⁷ Pa·m³/s after the cover plate is welded to the housing 4, which satisfy post-weld strength and airtightness requirements while ensuring that both the height C1 of the first protruding structure 5 and the height C2 of the second protruding structure 6 are less than 200 µm, satisfying post-welding flatness requirements.

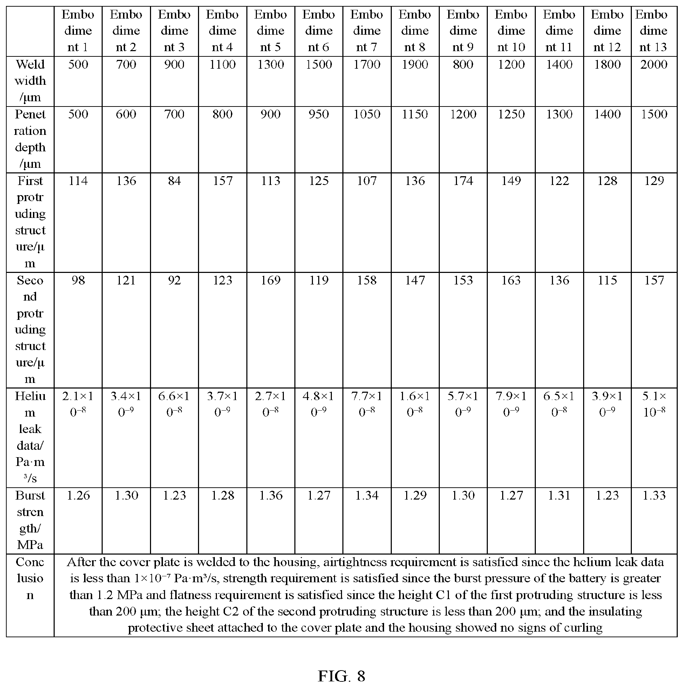

As shown in table of FIG. 8, thirteen embodiments in which the weld width n ranges from 500 µm to 2000 µm and the penetration depth m ranges from 500 µm to 1500 µm are selected for illustration.

In Embodiment 1, the weld width n is set to 500 µm and the penetration depth m is set to 500 µm. In this case, post-welding flatness requirement is satisfied since the height C1 of the first protruding structure 5 formed after the cover plate is welded to the housing 4 is 114 µm, which is less than 200 µm, and the height C2 of the second protruding structure 6 formed after the cover plate is welded to the housing 4 is 98 µm, which is less than 200 µm. Helium leak test and strength test were performed after welding, post-welding airtightness requirement is satisfied since the measured helium leak rate is 2.1×10⁻⁸ Pa·m³/s, which is less than 1×10⁻⁷ Pa·m³/s, and post-welding weld strength requirement is satisfied since the burst pressure is 1.26 MPa, which is greater than 1.2 MPa.

In Embodiment 2, the weld width n is set to 700 µm and the penetration depth m is set to 600 µm. In this case, post-welding flatness requirement is satisfied since the height C1 of the first protruding structure 5 formed after the cover plate is welded to the housing 4 is 136 µm, which is less than 200 µm, and the height C2 of the second protruding structure 6 formed after the cover plate is welded to the housing 4 is 121 µm, which is less than 200 µm. Helium leak test and strength test were performed after welding, post-welding airtightness requirement is satisfied since the measured helium leak rate is 3.4×10⁻⁹ Pa·m³/s, which is less than 1×10⁻⁷ Pa·m³/s, and post-welding weld strength requirement is satisfied since the burst pressure is 1.30 MPa, which is greater than 1.2 MPa.

In Embodiment 3, the weld width n is set to 900 µm and the penetration depth m is set to 700 µm. In this case, post-welding flatness requirement is satisfied since the height C1 of the first protruding structure 5 formed after the cover plate is welded to the housing 4 is 84 µm, which is less than 200 µm, and the height C2 of the second protruding structure 6 formed after the cover plate is welded to the housing 4 is 92 µm, which is less than 200 µm. Helium leak test and strength test were performed after welding, post-welding airtightness requirement is satisfied since the measured helium leak rate is 6.6×10⁻⁸ Pa·m³/s, which is less than 1×10⁻⁷ Pa·m³/s, and post-welding weld strength requirement is satisfied since the burst pressure is 1.23 MPa, which is greater than 1.2 MPa.

In Embodiment 4, the weld width n is set to 1100 µm and the penetration depth m is set to 800 µm. In this case, post-welding flatness requirement is satisfied since the height C1 of the first protruding structure 5 formed after the cover plate is welded to the housing 4 is 157 µm, which is less than 200 µm, and the height C2 of the second protruding structure 6 formed after the cover plate is welded to the housing 4 is 123 µm, which is less than 200 µm. Helium leak test and strength test were performed after welding, post-welding airtightness requirement is satisfied since the measured helium leak rate is 3.7×10⁻⁹ Pa·m³/s, which is less than 1×10⁻⁷ Pa·m³/s, and post-welding weld strength requirement is satisfied since the burst pressure is 1.28 MPa, which is greater than 1.2 MPa.

In Embodiment 5, the weld width n is set to 1300 µm and the penetration depth m is set to 900 µm. In this case, post-welding flatness requirement is satisfied since the height C1 of the first protruding structure 5 formed after the cover plate is welded to the housing 4 is 113 µm, which is less than 200 µm, and the height C2 of the second protruding structure 6 formed after the cover plate is welded to the housing 4 is 169 µm, which is less than 200 µm. Helium leak test and strength test were performed after welding, post-welding airtightness requirement is satisfied since the measured helium leak rate is 2.7×10⁻⁹ Pa·m³/s, which is less than 1×10⁻⁷ Pa·m³/s, and post-welding weld strength requirement is satisfied since the burst pressure is 1.36 MPa, which is greater than 1.2 MPa.

In Embodiment 6, the weld width n is set to 1500 µm and the penetration depth m is set to 950 µm. In this case, post-welding flatness requirement is satisfied since the height C1 of the first protruding structure 5 formed after the cover plate is welded to the housing 4 is 125 µm, which is less than 200 µm, and the height C2 of the second protruding structure 6 formed after the cover plate is welded to the housing 4 is 119 µm, which is less than 200 µm. Helium leak test and strength test were performed after welding, post-welding airtightness requirement is satisfied since the measured helium leak rate is 4.8×10⁻⁹ Pa·m³/s, which is less than 1×10⁻⁷ Pa·m³/s, and post-welding weld strength requirement is satisfied since the burst pressure is 1.27 MPa, which is greater than 1.2 MPa.

In Embodiment 7, the weld width n is set to 1700 µm and the penetration depth m is set to 1050 µm. In this case, post-welding flatness requirement is satisfied since the height C1 of the first protruding structure 5 formed after the cover plate is welded to the housing 4 is 107 µm, which is less than 200 µm, and the height C2 of the second protruding structure 6 formed after the cover plate is welded to the housing 4 is 158 µm, which is less than 200 µm. Helium leak test and strength test were performed after welding, post-welding airtightness requirement is satisfied since the measured helium leak rate is 7.7×10⁻⁸ Pa·m³/s, which is less than 1×10⁻⁷ Pa·m³/s, and post-welding weld strength requirement is satisfied since the burst pressure is 1.34 MPa, which is greater than 1.2 MPa.

In Embodiment 8, the weld width n is set to 1900 µm and the penetration depth m is set to 1150 µm. In this case, post-welding flatness requirement is satisfied since the height C1 of the first protruding structure 5 formed after the cover plate is welded to the housing 4 is 136 µm, which is less than 200 µm, and the height C2 of the second protruding structure 6 formed after the cover plate is welded to the housing 4 is 147 µm, which is less than 200 µm. Helium leak test and strength test were performed after welding, post-welding airtightness requirement is satisfied since the measured helium leak rate is 1.6×10⁻⁸ Pa·m³/s, which is less than 1×10⁻⁷ Pa·m³/s, and post-welding weld strength requirement is satisfied since the burst pressure is 1.29 MPa, which is greater than 1.2 MPa.

In Embodiment 9, the weld width n is set to 800 µm and the penetration depth m is set to 1200 µm. In this case, post-welding flatness requirement is satisfied since the height C1 of the first protruding structure 5 formed after the cover plate is welded to the housing 4 is 174 µm, which is less than 200 µm, and the height C2 of the second protruding structure 6 formed after the cover plate is welded to the housing 4 is 153 µm, which is less than 200 µm. Helium leak test and strength test were performed after welding, post-welding airtightness requirement is satisfied since the measured helium leak rate is 5.7×10⁻⁹ Pa·m³/s, which is less than 1×10⁻⁷ Pa·m³/s, and post-welding weld strength requirement is satisfied since the burst pressure is 1.30 MPa, which is greater than 1.2 MPa.

In Embodiment 10, the weld width n is set to 1200 µm and the penetration depth m is set to 1250 µm. In this case, post-welding flatness requirement is satisfied since the height C1 of the first protruding structure 5 formed after the cover plate is welded to the housing 4 is 149 µm, which is less than 200 µm, and the height C2 of the second protruding structure 6 formed after the cover plate is welded to the housing 4 is 163 µm, which is less than 200 µm. Helium leak test and strength test were performed after welding, post-welding airtightness requirement is satisfied since the measured helium leak rate is 7.9×10⁻⁹ Pa·m³/s, which is less than 1×10⁻⁷ Pa·m³/s, and post-welding weld strength requirement is satisfied since the burst pressure is 1.27 MPa, which is greater than 1.2 MPa.

In Embodiment 11, the weld width n is set to 1400 µm and the penetration depth m is set to 1300 µm. In this case, post-welding flatness requirement is satisfied since the height C1 of the first protruding structure 5 formed after the cover plate is welded to the housing 4 is 122 µm, which is less than 200 µm, and the height C2 of the second protruding structure 6 formed after the cover plate is welded to the housing 4 is 136 µm, which is less than 200 µm. Helium leak test and strength test were performed after welding, post-welding airtightness requirement is satisfied since the measured helium leak rate is 6.5×10⁻⁸ Pa·m³/s, which is less than 1×10⁻⁷ Pa·m³/s, and post-welding weld strength requirement is satisfied since the burst pressure is 1.31 MPa, which is greater than 1.2 MPa.

In Embodiment 12, the weld width n is set to 1800 µm and the penetration depth m is set to 1400 µm. In this case, post-welding flatness requirement is satisfied since the height C1 of the first protruding structure 5 formed after the cover plate is welded to the housing 4 is 128 µm, which is less than 200 µm, and the height C2 of the second protruding structure 6 formed after the cover plate is welded to the housing 4 is 115 µm, which is less than 200 µm. Helium leak test and strength test were performed after welding, post-welding airtightness requirement is satisfied since the measured helium leak rate is 3.9×10⁻⁹ Pa·m³/s, which is less than 1×10⁻⁷ Pa·m³/s, and post-welding weld strength requirement is satisfied since the burst pressure is 1.23 MPa, which is greater than 1.2 MPa.

In Embodiment 13, the weld width n is set to 2000 µm and the penetration depth m is set to 1500 µm. In this case, post-welding flatness requirement is satisfied since the height C1 of the first protruding structure 5 formed after the cover plate is welded to the housing 4 is 179 µm, which is less than 200 µm, and the height C2 of the second protruding structure 6 formed after the cover plate is welded to the housing 4 is 157 µm, which is less than 200 µm. Helium leak test and strength test were performed after welding, post-welding airtightness requirement is satisfied since the measured helium leak rate is 5.1×10⁻⁸ Pa·m³/s, which is less than 1×10⁻⁷ Pa·m³/s, and post-welding weld strength requirement is satisfied since the burst pressure is 1.33 MPa, which is greater than 1.2 MPa.

As shown in Embodiments 1 to 13, when the weld width n of the weld seam 9 formed after the cover plate is welded to the housing 4 ranges from 500 µm to 2000 µm and the penetration depth m of the weld seam 9 ranges from 500 µm to 1500 µm, after the cover plate is welded to the housing 4, post-welding airtightness requirement is satisfied since all the helium leak data is less than 1×10⁻⁷ Pa·m³/s; strength requirement is satisfied since all the burst pressure of the battery is greater than 1.2 MPa; and flatness requirement is satisfied since the height C1 of the first protruding structure 5 is less than 200 µm; the height C2 of the second protruding structure 6 formed after the cover plate is welded to the housing 4 is less than 200 µm; and the insulating protective sheet attached to the cover plate and the housing 4 showed no signs of curling.

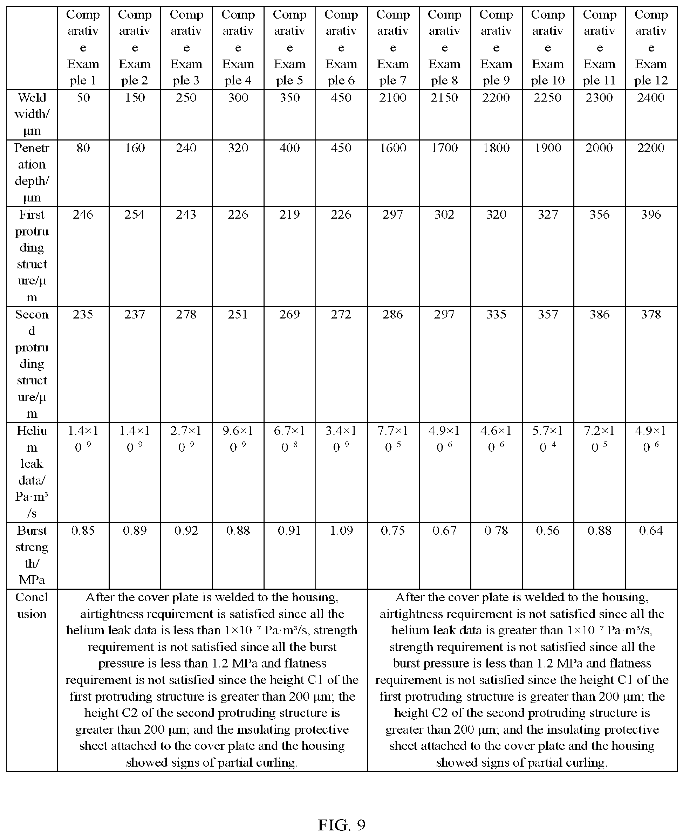

As shown in the table in FIG. 9, to illustrate effects of weld width n and the penetration depth m on post-welding weld strength, airtightness, and surface flatness more clearly, twelve Comparative Examples in which the weld width n is beyond ranging from 500 µm to 2000 µm and the penetration depth m is beyond ranging from 500 µm to 1500 µm are selected for illustration. Comparative Examples 1 to 6 include the weld width n of less than 500 µm and the penetration depth m of less than 500 µm, whereas Comparative Examples 7 to 12 include a weld width n greater than 2000 µm and the penetration depth m greater than 1500 µm.

In Comparative Example 1, the weld width n is set to 50 µm and the penetration depth m is set to 80 µm. In this case, post-welding flatness requirement is not satisfied since the height C1 of the first protruding structure 5 formed after the cover plate is welded to the housing 4 is 246 µm, which is greater than 200 µm, and the height C2 of the second protruding structure 6 formed after the cover plate is welded to the housing 4 is 235 µm, which is greater than 200 µm. Helium leak test and strength test were performed after welding, post-welding airtightness requirement is satisfied since the measured helium leak rate is 1.4×10⁻⁹ Pa·m³/s, which is less than 1×10⁻⁷ Pa·m³/s, and post-welding weld strength requirement is not satisfied since the burst pressure is 0.85 MPa, which is less than 1.2 MPa.

In Comparative Example 2, the weld width n is set to 150 µm and the penetration depth m is set to 160 µm. In this case, post-welding flatness requirement is not satisfied since the height C1 of the first protruding structure 5 formed after the cover plate is welded to the housing 4 is 254 µm, which is greater than 200 µm, and the height C2 of the second protruding structure 6 formed after the cover plate is welded to the housing 4 is 237 µm, which is greater than 200 µm. Helium leak test and strength test were performed after welding, post-welding airtightness requirement is satisfied since the measured helium leak rate is 1.4×10⁻⁹ Pa·m³/s, which is less than 1×10⁻⁷ Pa·m³/s, and post-welding weld strength requirement is not satisfied since the burst pressure is 0.89 MPa, which is less than 1.2 MPa.

In Comparative Example 3, the weld width n is set to 250 µm and the penetration depth m is set to 240 µm. In this case, post-welding flatness requirement is not satisfied since the height C1 of the first protruding structure 5 formed after the cover plate is welded to the housing 4 is 243 µm, which is greater than 200 µm, and the height C2 of the second protruding structure 6 formed after the cover plate is welded to the housing 4 is 278 µm, which is greater than 200 µm. Helium leak test and strength test were performed after welding, post-welding airtightness requirement is satisfied since the measured helium leak rate is 2.7×10⁻⁹ Pa·m³/s, which is less than 1×10⁻⁷ Pa·m³/s, and post-welding weld strength requirement is not satisfied since the burst pressure is 0.92 MPa, which is less than 1.2 MPa.

In Comparative Example 4, the weld width n is set to 300 µm and the penetration depth m is set to 320 µm. In this case, post-welding flatness requirement is not satisfied since the height C1 of the first protruding structure 5 formed after the cover plate is welded to the housing 4 is 226 µm, which is greater than 200 µm, and the height C2 of the second protruding structure 6 formed after the cover plate is welded to the housing 4 is 251 µm, which is greater than 200 µm. Helium leak test and strength test were performed after welding, post-welding airtightness requirement is satisfied since the measured helium leak rate is 9.6×10⁻⁹ Pa·m³/s, which is less than 1×10⁻⁷ Pa·m³/s, and post-welding weld strength requirement is not satisfied since the burst pressure is 0.88 MPa, which is less than 1.2 MPa.

In Comparative Example 5, the weld width n is set to 350 µm and the penetration depth m is set to 400 µm. In this case, post-welding flatness requirement is not satisfied since the height C1 of the first protruding structure 5 formed after the cover plate is welded to the housing 4 is 219 µm, which is greater than 200 µm, and the height C2 of the second protruding structure 6 formed after the cover plate is welded to the housing 4 is 269 µm, which is greater than 200 µm. Helium leak test and strength test were performed after welding, post-welding airtightness requirement is satisfied since the measured helium leak rate is 6.7×10⁻⁸ Pa·m³/s, which is less than 1×10⁻⁷ Pa·m³/s, and post-welding weld strength requirement is not satisfied since the burst pressure is 0.91 MPa, which is less than 1.2 MPa.

In Comparative Example 6, the weld width n is set to 450 µm and the penetration depth m is set to 450 µm. In this case, post-welding flatness requirement is not satisfied since the height C1 of the first protruding structure 5 formed after the cover plate is welded to the housing 4 is 226 µm, which is greater than 200 µm, and the height C2 of the second protruding structure 6 formed after the cover plate is welded to the housing 4 is 272 µm, which is greater than 200 µm. Helium leak test and strength test were performed after welding, post-welding airtightness requirement is satisfied since the measured helium leak rate is 3.4×10⁻⁹ Pa·m³/s, which is less than 1×10⁻⁷ Pa·m³/s, and post-welding weld strength requirement is not satisfied since the burst pressure is 1.09 MPa, which is less than 1.2 MPa.

As shown in Comparative Examples 1 to 6, when the weld width n of the weld seam 9 formed after the cover plate is welded to the housing 4 is less than 500 µm and the penetration depth m of the weld seam 9 is less than 500 µm, after the cover plate is welded to the housing 4, airtightness requirement is satisfied since all the helium leak data is less than 1×10⁻⁷ Pa·m³/s, but strength requirement is not satisfied since all the burst pressure of the battery is less than 1.2 MPa;and flatness requirement is not satisfied since the height C1 of the first protruding structure 5 is greater than 200 µm, the height C2 of the second protruding structure 6 is greater than 200 µm, and the insulating protective sheet attached to the cover plate and the housing 4 showed signs of curling.

In Comparative Example 7, the weld width n is set to 2100 µm and the penetration depth m is set to 1600 µm. In this case, post-welding flatness requirement is not satisfied since the height C1 of the first protruding structure 5 formed after the cover plate is welded to the housing 4 is 297 µm, which is greater than 200 µm, and the height C2 of the second protruding structure 6 is 286 µm, which is greater than 200 µm. Helium leak test and strength test were performed after welding, post-welding airtightness requirement is not satisfied since the measured helium leak rate is 7.7×10⁻⁵ Pa·m³/s, which is greater than 1×10⁻⁷ Pa·m³/s, and post-welding weld strength requirement is not satisfied since the burst pressure is 0.75 MPa, which is less than 1.2 MPa.

In Comparative Example 8, the weld width n is set to 2150 µm and the penetration depth m is set to 1700 µm. In this case, post-welding flatness requirement is not satisfied since the height C1 of the first protruding structure 5 formed after the cover plate is welded to the housing 4 is 302 µm, which is greater than 200 µm, and the height C2 of the second protruding structure 6 formed after the cover plate is welded to the housing 4 is 297 µm, which is greater than 200 µm. Helium leak test and strength test were performed after welding, post-welding airtightness requirement is not satisfied since the measured helium leak rate is 4.9×10⁻⁶ Pa·m³/s, which is greater than 1×10⁻⁷ Pa·m³/s, and post-welding weld strength requirement is not satisfied since the burst pressure is 0.67 MPa, which is less than 1.2 MPa.

In Comparative Example 9, the weld width n is set to 2200 µm and the penetration depth m is set to 1800 µm. In this case, post-welding flatness requirement is not satisfied since the height C1 of the first protruding structure 5 formed after the cover plate is welded to the housing 4 is 320 µm, which is greater than 200 µm, and the height C2 of the second protruding structure 6 is 335 µm, which is greater than 200 µm. Helium leak test and strength test were performed after welding, post-welding airtightness requirement is not satisfied since the measured helium leak rate is 4.6×10⁻⁶ Pa·m³/s, which is greater than 1×10⁻⁷ Pa·m³/s, and post-welding weld strength requirement is not satisfied since the burst pressure is 0.78 MPa, which is less than 1.2 MPa.

In Comparative Example 10, the weld width n is set to 2250 µm and the penetration depth m is set to 1900 µm. In this case, post-welding flatness requirement is not satisfied since the height C1 of the first protruding structure 5 formed after the cover plate is welded to the housing 4 is 327 µm, which is greater than 200 µm, and the height C2 of the second protruding structure 6 is 357 µm, which is greater than 200 µm. Helium leak test and strength test were performed after welding, post-welding airtightness requirement is not satisfied since the measured helium leak rate is 5.7×10⁻⁴ Pa·m³/s, which is greater than 1×10⁻⁷ Pa·m³/s, and post-welding weld strength requirement is not satisfied since the burst pressure is 0.56 MPa, which is less than 1.2 MPa.

In Comparative Example 11, the weld width n is set to 2300 µm and the penetration depth m is set to 2000 µm. In this case, post-welding flatness requirement is not satisfied since the height C1 of the first protruding structure 5 formed after the cover plate is welded to the housing 4 is 356 µm, which is greater than 200 µm, and the height C2 of the second protruding structure 6 is 386 µm, which is greater than 200 µm. Helium leak test and strength test were performed after welding, post-welding airtightness requirement is not satisfied since the measured helium leak rate is 7.2×10⁻⁵ Pa·m³/s, which is greater than 1×10⁻⁷ Pa·m³/s, and post-welding weld strength requirement is not satisfied since the burst pressure is 0.88 MPa, which is less than 1.2 MPa.

In Comparative Example 12, the weld width n is set to 2400 µm and the penetration depth m is set to 2200 µm. In this case, post-welding flatness requirement is not satisfied since the height C1 of the first protruding structure 5 formed after the cover plate is welded to the housing 4 is 396 µm, which is greater than 200 µm, and the height C2 of the second protruding structure 6 is 378 µm, which is greater than 200 µm. Helium leak test and strength test were performed after welding, post-welding airtightness requirement is not satisfied since the measured helium leak rate is 4.9×10⁻⁶ Pa·m³/s, which is greater than 1×10⁻⁷ Pa·m³/s, and post-welding weld strength requirement is not satisfied since the burst pressure is 0.64 MPa, which is less than 1.2 MPa.

As shown in Comparative Examples 7 to 12, when the weld width n of the weld seam 9 formed after the cover plate is welded to the housing 4 is less than 500 µm and the penetration depth m of the weld seam 9 is less than 500 µm, after the cover plate is welded to the housing 4, airtightness requirement is not satisfied since all the helium leak data is greater than 1×10⁻⁷ Pa·m³/s, strength requirement is not satisfied since all the burst pressure of the battery is less than 1.2 MPa and flatness requirement is not satisfied since the height C1 of the first protruding structure 5 is greater than 200 µm, the height C2 of the second protruding structure 6 is greater than 200 µm, and the insulating protective sheet attached to the cover plate and the housing 4 showed signs of curling.

In an embodiment, a side of the connection boss 3 facing the housing 4 is provided with a guide inclined surface 31. By providing the guide inclined surface 31 at the side of the connection boss 3 facing the housing 4, the cover plate is guided to be inserted to the housing 4, facilitating the assembly of the cover plate with the housing 4 and improving assembly efficiency.

In an embodiment, the cover plate is connected to the housing 4 through laser welding. By connecting the cover plate to the housing 4 through laser welding, high welding precision and welding accuracy are achieved, increasing a yield rate of the welded battery case.

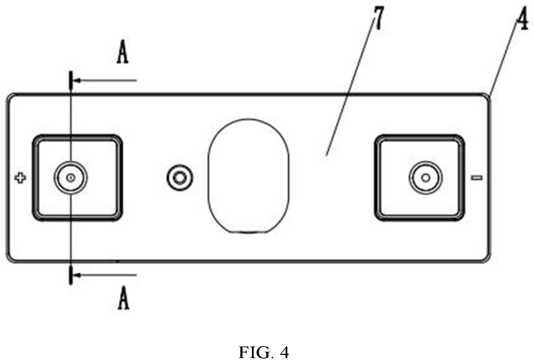

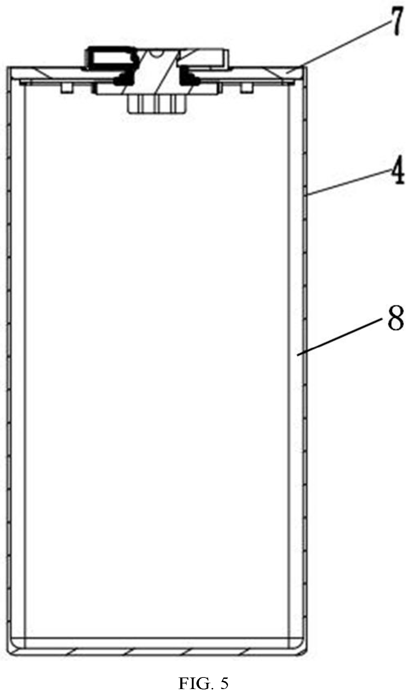

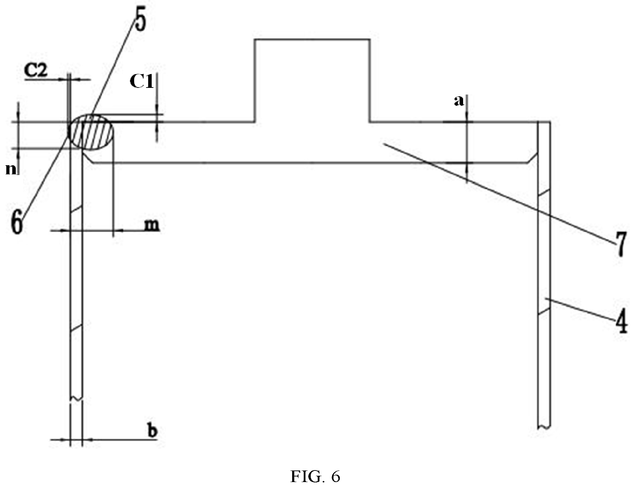

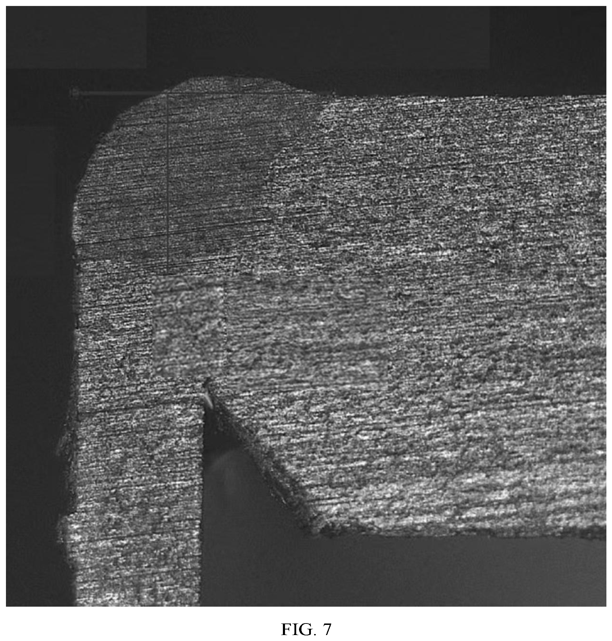

FIGs. 4 to 7 illustrate drawings of embodiments related to a prismatic lithium-ion power battery; components that are identical or corresponding to those in the blade lithium-ion power battery embodiment are provided with corresponding reference signs. For the sake of brevity, only the differences between these two types of lithium-ion power batteries are described.

The difference lies in the fact that the battery case is a battery case of the prismatic lithium-ion power battery; positive and negative tabs of the prismatic lithium-ion power battery are located at a same side of the cell. Consequently, the housing 4 is a hollow structure with an opening on one side and is provided with a corresponding cover plate. In this case, the cover plate is a top cover 7. The positive and negative tabs of the cell are connected to the same top cover 7, and the top cover 7 seals the opening of the housing 4. In the present embodiment, the dimensional constraints regarding the weld width ratio X, the penetration depth ratio Y, the thickness a of the region of the cover plate provided with the connection boss, the wall thickness b of the housing 4, the weld width n, and the penetration depth m are also applicable.

In some embodiments, there is further provided a power battery including the battery case according to any of the preceding embodiments, where the power battery further includes a cell electrode assembly 100 provided at an accommodation cavity 8, a length of the power battery is denoted by L ranging from 100 mm to 600 mm or from 600 mm to 1500 mm; a width of the power battery is denoted by B ranging from 50 mm to 250 mm; and a height of the power battery is denoted by H ranging from 10 mm to 100 mm. By utilizing the aforementioned battery case, the power battery can effectively avoid a condition under which the power battery fails due to cracking and leakage, enhancing usage safety of the power battery. The power battery may be the blade lithium-ion power battery shown in FIG. 1 or the prismatic lithium-ion power battery shown in FIG. 4.

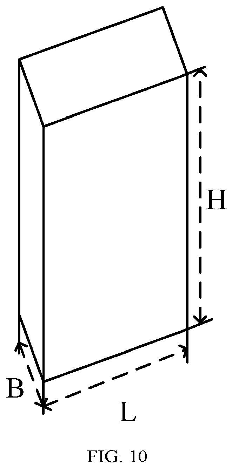

FIG. 10 illustrates the length L, width B, and height H of the power battery according to some embodiments of the present application.

## Claims

1. A battery case, comprising a cover plate and a housing,
wherein the housing is a hollow structure provided with an opening, and the cover plate is provided with a connection boss, the connection boss is inserted into the opening of the housing and the cover plate encloses the housing to form an accommodation cavity;
wherein a weld seam is provided at a connection between the housing and the cover plate; the weld seam has a weld width denoted by n, a thickness of a region of the cover plate where the connection boss is provided is denoted by a, a weld width ratio is denoted by X=n/a, and X ranges from 0.16 to 1.

2. The battery case of claim 1, wherein the weld seam further has a penetration depth denoted by m, a wall thickness of the housing is denoted by b, a penetration depth ratio is denoted by Y=m/b, and Y ranges from 1 to 7.5.

3. The battery case of claim 2, wherein the thickness a is greater than the weld width n, and the wall thickness b is less than the penetration depth m.

4. The battery case of claim 3, wherein dimensional information of the battery case comprises at least one of: the weld width n ranging from 500 µm to 2000 µm, or the thickness a ranging from 1.5 mm to 3 mm.

5. The battery case of claim 3, wherein dimensional information of the battery case comprises at least one of: the penetration depth m ranging from 500 µm to 1500 µm, or the wall thickness b ranging from 0.2 mm to 1.5 mm.

6. The battery case of claim 1, wherein after the cover plate is welded to the housing, a first protruding structure is formed at a top surface of the cover plate, and a height of the first protruding structure is denoted by C1 and C1 is less than 200 µm.

7. The battery case of claim 1, wherein after the cover plate is welded to the housing, a second protruding structure is formed at side surfaces of the cover plate and the housing, and a height of the second protruding structure is denoted by C2 and C2 is less than 200 µm.

8. The battery case of claim 1, wherein a side of the connection boss facing the housing is provided with a guide inclined surface.

9. The battery case of claim 1, wherein the cover plate is connected to the housing through laser welding.

10. A power battery, comprising the battery case of any one of claims 1 to 9, wherein the power battery further comprises a cell electrode assembly disposed within the accommodation cavity, a length of the power battery is denoted by L ranging from 100 mm to 600 mm or from 600 mm to 1500 mm; a width of the power battery is denoted by B ranging from 50 mm to 250 mm; and a height of the power battery is denoted by H ranging from 10 mm to 100 mm.
